# EUROPÄISCHE PATENTSCHRIFT

(11) **EP 3 029 791 B1**
(45) Veröffentlichungstag und Bekanntmachung des Hinweises auf die Patenterteilung: **19.06.2019**
(21) Anmeldenummer: 14196062.5
(22) Anmeldetag: 03.12.2014
(51) Int. Cl.: H02H 3/20, H02H 9/04

(54) **Anordnung zum Schutz einer elektrischen Einrichtung und elektrische Einrichtung**
Assembly for protecting an electric device and electric device
Système de protection d'un dispositif électrique et dispositif électrique

(43) Veröffentlichungstag der Anmeldung: 08.06.2016
(73) Patentinhaber: Siemens Aktiengesellschaft, 80333 München (DE)
(72) Erfinder: Prochaska, Dirk, 09127 Chemnitz (DE)

(56) Entgegenhaltungen:
- WO-A1-96/17419
- DE-A1-102005 006 100
- JP-A- 2010 057 332

## Beschreibung

Die Erfindung betrifft eine Anordnung zum Schutz einer elektrischen Einrichtung vor Überspannungen mit einer in einem ersten Längszweig angeordneten Überstromschutzeinrichtung und einem zwischen der Überstromschutzeinrichtung und der zu schützenden elektrischen Einrichtung angeordneten Querzweig, der zu einem zweiten Längszweig führt, wobei in dem Querzweig eine Diode zur Ableitung transienter Überspannungen angeordnet ist, welche dafür ausgelegt ist leitend zu werden, wenn eine Spannungsschwelle überschritten wird, wodurch der aus der Überspannung resultierende Strom durch den Querzweig an der zu schützenden Einrichtung in den zweiten Längszweig vorbeileitbar ist.

Die JP 2010 057332 A, die den nächstliegenden Stand der Technik bildet, offenbart eine Überspannungsschutzschaltung, die die Erzeugung von Verzerrungen in einer Hochfrequenz-Übertragungsleitung unterdrückt.

In der DE 10 2005 006 100 A1 wird eine Sicherheitsschaltung zum Schutz eines Gerätes bei einer Verpolung offenbart.

Mit der WO 96/17419 A1 wird eine Schaltungsanordnung zum Zünden einer Funkenübertragungsstrecke vorgeschlagen.

Allgemein bekannt ist, dass bei Spannungszuführungen von elektrischen Geräten es üblich ist, nach einer Gerätesicherung eine Suppressordiode zur Begrenzung von Überspannungen anzuordnen. Nachteilig an der bekannten Anordnung ist es, dass es bei kurzzeitigen Spannungsimpulsen vorkommen kann, dass die Gerätesicherung vorzeitig auslöst. Im Regelfall ist die Gerätesicherung dafür ausgelegt, erst bei statischen Überspannungen bzw. Überströmen auszulösen, es ist demnach nicht gewollt, dass bereits durch kurzzeitige Spannungsimpulse die Gerätesicherung auslöst.

Bisher war eine Lösung das Problem zu umgehen, die Gerätesicherung derart auszulegen, dass man eine Vergrößerung ihres Ansprechverhaltens erreichte, welches in einem echten Fehlerfall zu Problemen führen kann, da das zu sichernde Geräte eventuell doch kurzzeitig mit einem Überstrom versorgt wird.

Daher ist es die Aufgabe der Erfindung eine bekannte Anordnung zum Schutz einer elektrischen Einrichtung vor Überspannungen dahingehend zu verbessern, dass dennoch die elektrische Einrichtung umfassend geschützt ist, aber die Sicherung bzw. eine Überstromschutzeinrichtung für das elektrische Gerät nicht vorzeitig auslöst.

Die Aufgabe wird für die eingangs genannte Anordnung durch die Merkmalskombination des Anspruchs 1 gelöst. Eine erste Induktivität ist in einer Reihenschaltung zu der Diode angeordnet, dabei ist die Diode mit einem ersten Dioden-Anschluss an dem ersten Längszweig und mit einem zweiten Dioden-Anschluss an die erste Induktivität angeschlossen, wodurch bei vorübergehenden Überspannungen die Überstromschutzeinrichtung nicht vorzeitig auslöst.

Bei kurzen Überspannungsimpulsen, beispielsweise bei kurzzeitiger Überspannung infolge von EMV-Effekten oder infolge eines Blitzschlages in einer übergeordneten Zone, welche jedoch über Umwege elektrisch mit der zu schützenden Einrichtung verbunden ist, kommt es zum Auslösen der Überstromschutzeinrichtung infolge des Ansprechens der Diode, insbesondere bei Auslegung der Diode als eine Suppressordiode. Um nun das vorzeitige Auslösen der Überstromschutzeinrichtung zu vermeiden, wird eine Induktivität in den Zweig der Diode eingebracht. Die Induktivität stellt für hohe Frequenzanteile des Überspannungsimpulses einen hohen Blindwiderstand dar, der den Strom begrenzt.

In den ersten Längszweig zwischen dem Querzweig und der zu schützenden elektrischen Einrichtung ist eine zweite Induktivität geschaltet und zusätzlich zwischen der zweiten Induktivität und der zu schützenden elektrischen Einrichtung ist eine Kapazität geschaltet, welche den ersten und den zweiten Längszweig verbindet. Die zweite Induktivität verhindert nun, im Falle eines Überspannungsimpulses, ein zu schnelles Ansteigen des Stromes in dem ersten Längszweig. Gleichzeitig wird eine Verringerung der Spannung an der Kapazität, insbesondere an einen Kondensator, erreicht. Üblicherweise ist die Kapazität als ein Ladekondensator ausgestaltet und befindet sich hinter der zweiten Induktivität, welches bedeutet, dass während des Überspannungsimpulses der überwiegende Teil der Überspannung an der zweiten Induktivität abfällt und das zu schützende elektrische Gerät, welches üblicherweise parallel zu der Kapazität angeschaltet ist, wird somit geschützt.

Die erste Induktivität mit der zweiten Induktivität derart zu verkoppeln, dass die beiden Induktivitäten miteinander magnetisch wechselwirken, wobei ihr Wicklungssinn gleichsinnig angeordnet ist, dabei ist ein erster Wicklungsanfang der ersten Induktivität an den zweiten Dioden-Anschluss der Diode angeschlossen und ein zweiter Wicklungsanfang der zweiten Induktivität an den ersten Dioden-Anschluss der Diode angeschlossen.

Werden die erste Induktivität und die zweite Induktivität beispielsweise als ein Übertrager oder ein Trafo mit möglichst fester Kopplung ausgestaltet, verstärkt sich die oben genannte Wirkung durch die gegenseitige Induktivitätsbeeinflussung. Bei Auftreten eines Überspannungsimpulses fällt fast die gesamte Spannung über der zweiten Induktivität ab. Diese Spannung wird transformatorisch in die erste Induktivität übertragen und hebt das Spannungspotential der Diode um fast den gleichen Betrag an. Damit wird durch die Diode, insbesondere durch die Suppressordiode, wesentlich weniger Überstrom fließen. Dieser reduzierte Überstromstrom generiert wiederum einen Fluss in der ersten Induktivität der zur Induktion einer Spannung in der zweiten Induktivität führt. Um diese induzierte Spannung wird der Pegel an einem Ausgang der Anordnung reduziert. Die Anordnung verringert demnach die Spannung an ihrem Ausgang und verringert den Stromfluss durch die Suppressordiode bei eintretenden Störimpulsen. Betrachtet man die induzierten Spannungen auf beiden Seiten des genannten Übertragers, so wirken sie immer dem Stromfluss entgegen und verringern somit, den Strom durch die Überstromschutzeinrichtung und der Suppressordiode sowie den Strom durch die gesamte Schaltung. Bei einer statischen Überspannung wirkt die erste Induktivität als ein Gleichstromwiderstand, wobei die Spannungshöhe durch die Suppressordiode begrenzt wird und bei Auslösen der Suppressordiode kann die Überstromschutzeinrichtung gewollt auslösen.

Ein Synergieeffekt ergibt dadurch, dass die erste Induktivität und die zweite Induktivität in ihrer verkoppelten Ausgestaltung schon in Form von beispielsweise stromkompensierten Drosseln in einer großen Varianz angeboten werden. Nun aber werden diese stromkompensierten Drosseln erfindungsgemäß völlig anders verschaltet, als man es sonst bei stromkompensierten Drosseln gewohnt war. Diese neue Art der Verschaltung führt zu einer sprunghaften Verbesserung der Impulsfestigkeit einer Anordnung zum Schutz einer elektrischen Einrichtung vor Überspannungen. Die zu schützenden Einrichtungen bzw. elektrischen Geräte erfahren dadurch eine erhebliche Qualitätsverbesserung und eine höhere Robustheit in Bezug auf den Einsatz in EMV gefährdeten Umgebungen.

Insbesondere im Bezug auf die industrielle Automatisierungstechnik mit erhöhten Anforderungen an die Robustheit von elektrischen Einrichtungen ist es von Vorteil, wenn eine elektrische Einrichtung mit einem ersten Anschluss und einem zweiten Anschluss zum Anschluss einer Versorgungsspannung bereitgestellt wird, wobei eine Anordnung nach einem der Ansprüche 1 bis 4 derart an den ersten Anschluss und dem zweiten Anschluss angeschlossen ist, dass die Kapazität zwischen dem ersten Anschluss und dem zweiten Anschluss angeordnet ist und die Versorgungsspannung über die Anordnung an die Einrichtung geführt ist.

Ist zudem die elektrische Einrichtung als eine Automatisierungskomponente für den Einsatz in der Industrieautomatisierung ausgestaltet, so können die eingesetzten Automatisierungskomponenten mit Vorteil mit einer erhöhten Robustheit, insbesondere in einer EMV belasteten Industrieumgebung eingesetzt werden.

Die Zeichnung zeigt ein Ausführungsbeispiel. Es zeigt:
- FIG 1: eine Anordnung zum Schutz einer elektrischen Einrichtung und
- FIG 2: eine elektrische Einrichtung ausgestaltet als eine Automatisierungskomponente in einem Industrieumfeld.

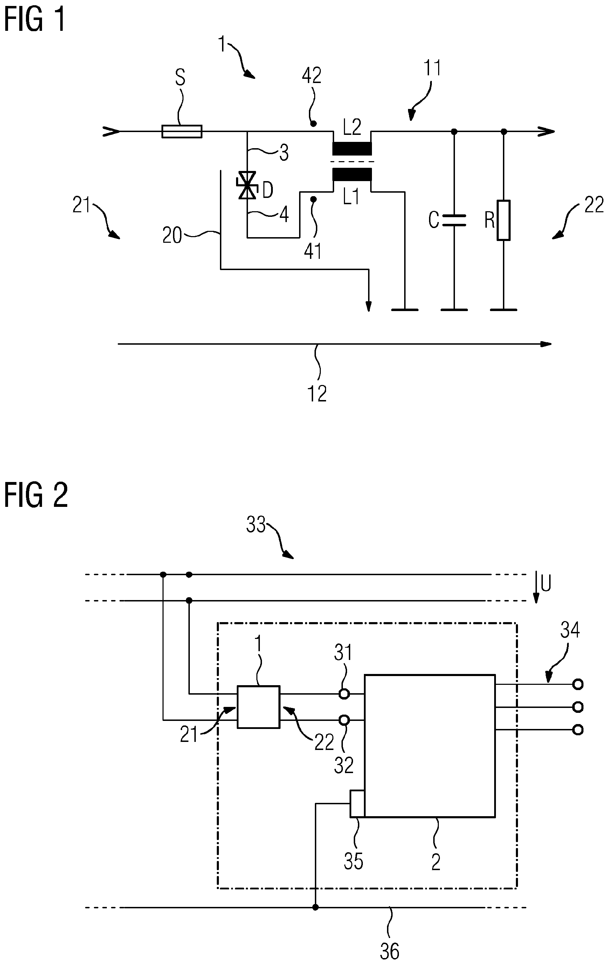

Gemäß FIG 1 ist eine Anordnung 1 zum Schutz einer elektrischen Einrichtung 2 vor Überspannungen dargestellt. Die Anordnung 1 weist einen Eingang 21 zum Anschluss einer Versorgungsspannung und einen Ausgang 22 zum Anschluss der elektrischen Einrichtung 2 auf. Zwischen dem Eingang 21 und dem Ausgang 22 verläuft ein erster Längszweig 11 und ein zweiter Längszweig 12. Der zweite Längszweig 12 dient im Wesentlichen der Masse an Bindung für die Anordnung 1.

Ausgehend von dem Eingang 21 befinden sich in Richtung des Ausgangs 22 in dem ersten Längszweig 11 zunächst eine Überstromschutzeinrichtung S, beispielsweise eine Schmelzsicherung oder ein Sicherungsautomat, hinter der Überstromschutzeinrichtung S ist eine Diode D zu Ableitung transienter Überspannungen mit einem ersten Dioden-Anschluss 3 an den ersten Längszweig 11 angeschlossen. Weiterhin liegt in dem ersten Längszweig 11 in Reihe mit der Überstromschutzeinrichtung S eine zweite Induktivität L2. Von der zweiten Induktivität L2 führt der erste Längszweig 11 weiter zu dem Ausgang 22, woran letztendlich die elektrische Einrichtung 2 angeschlossen werden kann.

Zum Schutz der elektrischen Einrichtung 2 vor Überspannungen ist zwischen der Überstromschutzeinrichtung S und der zu schützenden elektrischen Einrichtung 2 ein Querzweig 20 angeordnet. In dem Querzweig 20 ist die Diode D zur Ableitung transienter Überspannungen angeordnet. Die Diode D ist dafür ausgelegt, leitend zu werden wenn eine Spannungsschwelle am Eingang 21 überschritten wird, wodurch der aus der Überspannung resultierende Strom durch den Querzweig 20 an der zu schützenden Einrichtung 2 in den zweiten Längszweig 12 vorbeileitbar ist. Dabei ist eine erste Induktivität L1 in einer Reihenschaltung zu der Diode D angeordnet, wobei die Diode D mit ihrem ersten Dioden-Anschluss 3 an den ersten Längszweig 11 und mit einem zweiten Dioden-Anschluss 4 an die erste Induktivität L1 angeschlossen ist.

Die erste Induktivität L1 ist mit der zweiten Induktivität L2 derart verkoppelt, dass die beiden Induktivitäten L1,L2 miteinander magnetisch wechselwirken, wobei ihr Wicklungssinn gleichsinnig angeordnet ist, dabei ist ein erster Wicklungsanfang 41 der ersten Induktivität L1 an den zweiten Dioden-Anschluss 4 der Diode D angeschlossen und ein zweiter Wicklungsanfang 42 der zweiten Induktivität L2 ist an den ersten Dioden-Anschluss 3 der Diode D angeschlossen. Zusätzlich ist zwischen der zweiten Induktivität L2 und der zu schützenden elektrischen Einrichtung 2 eine Kapazität C angeordnet, welche den ersten und zweiten Längszweig 11,12 verbindet und gleichzeitig den Ausgang 22 repräsentiert.

Vorteilhafterweise ist es möglich, die erste und die zweite Induktivität L1,L2 als ein Bauteil, insbesondere als eine stromkompensierte Drossel, einzusetzen. Dadurch ergibt sich ein Synergieeffekt, weil das Bauelement umfassend die erste Induktivität L1 und die zweite Induktivität L2 schon in Form der stromkompensierten Drossel in einer großen Varianz angeboten wird, nun aber erfindungsgemäß völlig anders verschaltet wird, welches zu einer sprunghaften Verbesserung der Impulsfestigkeit, beispielsweise von Eingangsschaltungen, Filter, Schutzschaltungen, für elektrische Geräte führt und damit eine erhebliche Qualitätsverbesserung und eine höhere Robustheit erreicht wird bzw. die Verfügbarkeit des Gerätes deutlich ansteigt.

Ein besonderer technischer Effekt liegt in der Ausnutzung der verkoppelten Induktivitäten L1 und L2 bzw. der daraus resultierenden gegenseitigen Induktivität. Beide Induktivitäten L1,L2 wirken wie ein Transformator. Die in beiden Induktivitäten L1,L2 induzierten Spannungen wirken jeweils entlastend für die Überstromschutzeinrichtung S. Wesentlich bei der Entlastung ist hierbei die besondere Wechselwirkung in den als Transformator wirkenden Induktivitäten L1 und L2, welche dadurch entsteht, dass im Falle eines kurzen Spannungsimpulses am Eingang 21 der Anordnung 1 in Verbindung mit der Kapazität C am Ausgang 22 fasst die gesamte Impulsspannung an der zweiten Induktivität L2 anliegt und damit auf direkten Weg die Spannung am Ausgang 22 um den Betrag des Spannungsabfalls an der zweiten Induktivität reduziert und damit die elektrische Einrichtung 2 geschützt wird.

Weiterhin gibt es einen weiteren überraschenden Effekt, der darin besteht, dass die über der zweiten Induktivität L2 anliegende Impulsspannung infolge der Ausführung der Induktivitäten L1,L2 als Transformator in die Induktivität L1 übertragen wird und eine Gegenspannung bildet, diese Gegenspannung wirkt der Durchbruchspannung der Diode D, insbesondere bei Einsatz einer Suppressordiode, entgegen und somit kann der Stromfluss durch die Diode D kurzzeitig reduziert bzw. nicht weiter ansteigen. Gleichzeitig führt der Reststrom durch die erste Induktivität L1 wiederum zu einer Induktion in der zweiten Induktivität L2 (Gegenspannung) wodurch sich die oben beschriebene Wirkung der Entlastung der Spannung über die Kapazität C verstärkt. Damit wird das langgehegte Bedürfnis erfüllt, dass die Überstromschutzeinrichtung S nicht wegen eines kurzen Spannungsimpulses vorzeitig auslöst. Statische Überspannungen sind von dem beschriebenen Szenario ausgenommen, da die Induktivitäten L1,L2 dort lediglich mit ihrem ohmschen Anteil wirken und eine Transformatorwirkung nicht zustande kommt.

Mit der FIG 2 wird die vorteilhafte Verwendung der Anordnung 1 im Einsatz eines industriellen Umfeldes gezeigt. Die elektrische Einrichtung 2 ist als eine Automatisierungskomponente für den Einsatz in der Industrieautomatisierung ausgestaltet. Die elektrische Einrichtung 2 weist einen ersten Anschluss 31 und einen zweiten Anschluss 32 zum Anschluss einer Versorgungsspannung U auf, wobei die aus FIG 1 bekannte Anordnung derart an den ersten Anschluss 31 und dem zweiten Anschluss 32 angeschlossen ist, dass die Kapazität C zwischen dem ersten Anschluss 31 und dem zweiten Anschluss 32 angeordnet ist und die Versorgungsspannung U über die Anordnung 1 an die Einrichtung 2 geführt ist. Mit ihrem Eingang 21 ist die Anordnung 1 an ein Versorgungsspannungsnetzwerk 33 angeschlossen. Weiterhin weist die Automatisierungskomponenten Ausgänge 34 zum Steuern eines industriellen Prozesses auf. Über einen Feldbus 36, wobei die Automatisierungskomponente mit einem Feldbusanschluss 35 an den Feldbus 36 angeschlossen ist, kann die Automatisierungskomponente von übergeordneten Automatisierungsgeräten Steuerungsbefehle erhalten.

Bei kurzen Spannungsimpulsen, beispielsweise bei kurzzeitiger Überspannung infolge eines Blitzschlages in einer übergeordneten Zone, welche dann wiederum auf irgendeine elektrische Art und Weise mit dem Versorgungsspannungsnetzwerk 33 verkoppelt ist, kam es zuvor ohne den Einsatz der erfindungsgemäßen Anordnung 1 zum Auslösen der Überstromschutzeinrichtung S infolge des sofortigen Ansprechens der Diode D. Abhilfe wird nun geschaffen, in dem die erste Induktivität L1 im Querzweig 20 der Diode D eingebracht wurde. Die erste Induktivität L1 stellt für die hohen Frequenzanteile eines Überspannungsimpulses einen hohen Blindwiderstand dar, der den Strom durch die Diode D begrenzt. Gleichzeitig verhindert die zweite Induktivität L2 ein zu schnelles Ansteigen des Stromes in dem ersten Längszweig 11. Durch das Verhindern des zu schnellen Anstieges wird auch eine Verringerung der Spannung am Ausgang 22 bzw. an den ersten Anschluss 31 und dem zweiten Anschluss 32 erreicht. Die Kapazität C, ausgestaltet als ein Ladekondensator, befindet sich hinter der zweiten Induktivität L2, welches bedeutet, das während des Überspannungsimpulses fast die ganze Überspannung der Induktivität L2 bzw. bei Einsatz einer stromkompensierten Drossel, an der Drossel abfällt und der Ausgang 22 wird somit geschützt.

## Patentansprüche

1. Anordnung (1) zum Schutz einer elektrischen Einrichtung (2) vor Überspannungen mit einer in einem ersten Längszweig (11) angeordneten Überstromschutzeinrichtung (S) und einem zwischen der Überstromschutzeinrichtung (S) und der zu schützenden elektrischen Einrichtung (2) angeordneten Querzweig (20), der zu einem zweiten Längszweig (12) führt, wobei in dem Querzweig (20) eine Diode (D) zur Ableitung transienter Überspannungen angeordnet ist, welche dafür ausgelegt ist leitend zu werden wenn eine Spannungsschwelle überschritten wird, wodurch der aus der Überspannung resultierende Strom durch den Querzweig (20) an der zu schützenden Einrichtung (2) in den zweiten Längszweig (12) vorbeileitbar ist, wobei eine erste Induktivität (L1) in einer Reihenschaltung zu der Diode (D) angeordnet ist, dabei ist die Diode (D) mit einem ersten Dioden-Anschluss (3) an dem ersten Längszweig (11) und mit einem zweiten Dioden-Anschluss (4) an die erste Induktivität (L1) angeschlossen, wodurch bei vorübergehenden Überspannungen die Überstromschutzeinrichtung (S) nicht vorzeitig ausgelöst wird,
**dadurch gekennzeichnet, dass**
in den ersten Längszweig (11) zwischen dem Querzweig (20) und der zu schützenden elektrischen Einrichtung (2) eine zweite Induktivität (L2) geschaltet ist und zusätzlich zwischen der zweiten Induktivität (L2) und der zu schützenden elektrischen Einrichtung (2) eine Kapazität (C) den ersten und zweiten Längszweig (11,12) verbindet, wobei die erste Induktivität (L1) mit der zweiten Induktivität (L2) derart verkoppelt ist, dass die beiden Induktivitäten (L1,L2) miteinander magnetisch wechselwirken, wobei ihr Wicklungssinn gleichsinnig angeordnet ist, dabei ist ein erster Wicklungsanfang (41) der ersten Induktivität (L1) an den zweiten Dioden-Anschluss (4) der Diode (D) angeschlossen und ein zweiter Wicklungsanfang (42) der zweiten Induktivität (L2) an den ersten Dioden-Anschluss (3) der Diode (D) angeschlossen.

2. Anordnung (1) nach Anspruch 1, wobei die erste und die zweite Induktivität (L1,L2) als ein Bauteil, insbesondere als eine stromkompensierte Drossel, ausgeführt sind.

3. Elektrische Einrichtung (2) mit einem ersten Anschluss (31) und einem zweiten Anschluss (32) zum Anschluss einer Versorgungsspannung (U), aufweisend eine Anordnung (1) nach einem der Ansprüche 1 bis 2, welche derart an den ersten Anschluss (31) und den zweiten Anschluss (32) angeschlossen ist, dass die Kapazität (C) zwischen dem ersten Anschluss (31) und dem zweiten Anschluss (32) angeordnet ist und die Versorgungsspannung (U) über die Anordnung (1) an die Einrichtung (2) geführt ist.

4. Elektrische Einrichtung (2) nach Anspruch 3 ausgestaltet als eine Automatisierungskomponente für den Einsatz in der Industrieautomatisierung.

## Claims

1. Arrangement (1) for protecting an electrical facility (2) from overvoltages with an overcurrent protection facility (S) arranged in a first series circuit (11) and a shunt circuit (20) arranged between the overcurrent protection facility (S) and the electrical facility (2) to be protected, said shunt circuit leading to a second series circuit (12), wherein a diode (D) for discharging transient overvoltages is arranged in the shunt circuit (20), said diode being designed here to be conductive, if a voltage threshold is exceeded, as a result of which the current resulting from the overvoltage can be passed through the shunt circuit (20) to the facility (2) to be protected into the second series circuit (12),
wherein a first inductor (L1) is arranged in a series connection with the diode (D), in this way the diode (D) with a first diode terminal (3) is connected to the first series circuit (11) and with a second diode terminal (4) to the first inductor (L1), whereby with temporary overvoltaqes the overcurrent protection facility (S) is not triggered prematurely,
**characterised in that**
a second inductor (L2) is connected in the first series circuit (11) between the shunt circuit (20) and the electrical facility (2) to be protected and in addition a capacitance (C) connects the first and second series circuit (11, 12) between the second inductor (L2) and the electrical facility (2) to be protected, wherein the first inductor (L1) is coupled to the second inductor (L2) such that the two inductors (L1, L2) interact magnetically with one another, wherein their sense of winding is arranged in the same direction, in this way a first start of winding (41) of the first inductor (L1) is connected to the second diode terminal (4) of the diode (D) and a second start of winding (42) of the second inductor (L2) is connected to the first diode terminal (3) of the diode (D).

2. Arrangement (1) according to claim 1, wherein the first and the second inductor (L1, L2) are embodied as a component, in particular as a current-compensated throttle.

3. Electrical facility (2) with a first terminal (31) and a second terminal (32) for connecting a supply voltage (U), having an arrangement (1) according to one of claims 1 to 2, which is connected to the first terminal (31) and the second terminal (32) such that the capacitance (C) is arranged between the first terminal (31) and the second terminal (32) and the supply voltage (U) is guided via the arrangement (1) to the facility (2).

4. Electrical facility (2) according to claim 3, embodied as an automation component for use in industrial automation.

## Revendications

1. Système (1) de protection d'un dispositif (2) électrique de surtension, comprenant un dispositif (S) de protection vis-à-vis d'une surintensité, monté dans une première branche (11) longitudinale, et une branche (20) transversale, qui est montée entre le dispositif (S) de protection vis-à-vis d'une surintensité et le dispositif (2) électrique à protéger et qui mène à une deuxième branche (12) longitudinale, dans lequel il est monté, dans la branche (20) transversale, une diode (D) de dérivation de surtensions transitoires, qui est conçue pour devenir conductrice, si un seuil de tension est dépassé, grâce à quoi le courant provenant de la surtension peut, par la branche (20) transversale, contourner le dispositif (2) à protéger dans la deuxième branche (12) longitudinale, une première inductance (L1) étant montée suivant un montage en série avec la diode (D), la diode (D) étant connectée par une première borne (3) de diode à la première branche (11) longitudinale et par une deuxième borne (4) de diode à la première inductance (11), grâce à quoi, s'il se produit des surtensions passagères, le dispositif (S) de protection vis-à-vis d'une surintensité n'est pas déclenché prématurément, **caractérisé en ce qu'**
une deuxième inductance (L2) est montée dans la première branche (11) longitudinale, entre la branche (20) transversale et le dispositif (2) électrique à protéger, et, en outre, entre la deuxième inductance (L2) et le dispositif (2) électrique à protéger, une capacité (C) relie la première et la deuxième branches (11, 12) longitudinales, la première inductance (L1) étant couplée à la deuxième inductance (L2), de manière à ce que les deux inductances (L1, L2) interagissent entre elles magnétiquement, leur sens d'enroulement étant le même, un premier début (41) d'enroulement de la première inductance (L1) étant connecté à la deuxième borne (4) de la diode (D) et un deuxième début (42) d'enroulement de la deuxième inductance (L2) étant connecté à la première borne (3) de la diode (D).

2. Système suivant la revendication 1, dans lequel la première et la deuxième inductances (L1, L2) sont réalisées sous la forme d'une pièce, notamment d'une bobine de self à courant compensé.

3. Dispositif (2) électrique, comprenant une première borne (31) et une deuxième borne (32) de connexion à une tension (U) d'alimentation, comportant un système (1) suivant l'une des revendications 1 à 2, qui est connecté à la première borne (31) et à la deuxième borne (32), de manière à monter la capacité (C) entre la première borne (31) et la deuxième borne (32) et à appliquer la tension (U) d'alimentation au dispositif (2) par l'intermédiaire du système (1).

4. Dispositif (2) électrique suivant la revendication 3, conformé en composant d'automatisation à utiliser dans l'automatisation industrielle.
